# EUROPEAN PATENT APPLICATION

(11) **EP 4 535 776 A1**
(43) Date of publication of application: **09.04.2025**
(21) Application number: 22943734.8
(22) Date of filing: 25.05.2022
(51) Int. Cl.: H04N 7/18

(54) **REMOTE MACHINE OPERATION SYSTEM, VISUAL PRESENTATION DEVICE, VISUAL PRESENTATION METHOD, AND PROGRAM**

(71) Applicant: MITSUBISHI ELECTRIC CORPORATION, Chiyoda-ku Tokyo 100-8310 (JP)
(72) Inventor: HARUNA, Masaki, Tokyo 100-8310 (JP)
(74) Representative: Hoffmann Eitle
(86) International application number: PCT/JP2022/021438
(87) International publication number: WO 2023/228331

(57) **Abstract**

A remote machine manipulation system (100) according to the present disclosure includes: a shooting unit (26) that shoots an image of a remote machine (2) that is remotely manipulated; and a visual presentation apparatus (1) that receives the image shot by the shooting unit (26) and presents an operator who manipulates the remote machine (2) with the image by displaying the received image, the visual presentation apparatus (1) including: a communication situation monitoring unit (11) that detects a communication situation in the reception of the image; and a presented image control unit (12) that determines a central field-of-view region and a peripheral field-of-view region in a display region in which the image is displayed and determines, on the basis of the communication situation detected by the communication situation monitoring unit (11), an image parameter related to a transmission rate of a central field-of-view image displayed in the central field-of-view region and a peripheral field-of-view image displayed in the peripheral field-of-view region.

## Description

### Field

The present disclosure relates to a remote machine manipulation system, a visual presentation apparatus, a visual presentation method, and a program for presenting an image related to a remote machine.

### Background

Conventionally, there is an apparatus that presents an image to an observer of an object to be observed. Patent Literature 1 discloses a stereoscopic image observation apparatus that presents an image to both eyes of an observer to give a stereoscopic image thereto.

### Citation List

### Patent Literature

Patent Literature 1: Japanese Patent Application Laid-open No. H9-80353

### Summary of Invention

### Problem to be solved by the Invention

In the technique described in Patent Literature 1, it is assumed that the image is directly transmitted from a camera by which the image is acquired to image presenting devices, and image data can be used without concern for the capacity. Meanwhile, in order for an operator to observe the image at a remote place away from the camera, the image is transmitted using a communication line. When the technique described in Patent Literature 1 is applied to a system in which the operator observes the image at a remote place, the communication needs to be broadband and stable at all times, and thus there is a problem that an image suitable for a communication situation cannot be presented.

The present disclosure has been made in view of the above, and an object of the present disclosure is to provide a remote machine manipulation system capable of presenting an image suitable for a communication situation.

### Means to Solve the Problem

To solve the above problem and achieve the object, a remote machine manipulation system according to the present disclosure comprises: a camera to shoot an image of a remote machine that is remotely manipulated; and a visual presentation apparatus to receive the image shot by the camera, and present an operator who manipulates the remote machine with the image by displaying the received image. The visual presentation apparatus includes: a communication situation monitoring unit to detect a communication situation in the reception of the image; and a presented image control unit to determine a central field-of-view region and a peripheral field-of-view region in a display region in which the image is displayed and determine, on the basis of the communication situation detected by the communication situation monitoring unit, an image parameter related to a transmission rate of a central field-of-view image displayed in the central field-of-view region and a peripheral field-of-view image displayed in the peripheral field-of-view region.

### Effects of the Invention

The remote machine manipulation system according to the present disclosure has an effect of being able to present the image suitable for the communication situation.

### Brief Description of Drawings

FIG. 1 is a diagram illustrating an exemplary configuration of a remote machine manipulation system according to a first embodiment.
FIG. 2 is a diagram for explaining characteristics of human vision.
FIG. 3 is a diagram illustrating examples of an image display region of the first embodiment corresponding to each of a central field of view and a peripheral field of view.
FIG. 4 is a flowchart illustrating an example of an image control processing procedure in a visual presentation apparatus of the first embodiment.
FIG. 5 is a table illustrating an example of image setting information of the first embodiment.
FIG. 6 is a diagram illustrating an exemplary configuration of a computer system that implements the visual presentation apparatus of the first embodiment.
FIG. 7 is a diagram illustrating an exemplary configuration of a remote machine manipulation system according to a second embodiment.
FIG. 8 is a diagram illustrating an exemplary configuration of a remote machine manipulation system according to a third embodiment.
FIG. 9 is a table illustrating an example of image setting information of the third embodiment.
FIG. 10 is a diagram illustrating an exemplary configuration of a remote machine manipulation system according to a fourth embodiment.
FIG. 11 is a diagram illustrating an exemplary configuration of a remote machine manipulation system according to a fifth embodiment.
FIG. 12 is a diagram illustrating an example of an object detected by an apparatus peripheral situation monitoring device of the fifth embodiment.
FIG. 13 is a diagram illustrating an exemplary configuration of a remote machine manipulation system according to a sixth embodiment.
FIG. 14 is a diagram illustrating an exemplary configuration of a remote machine manipulation system according to a seventh embodiment.
FIG. 15 is a diagram illustrating an exemplary configuration of a remote machine manipulation system according to an eighth embodiment.
FIG. 16 is a set of diagrams illustrating examples of an image displayed by a visual presentation apparatus of the eighth embodiment in a case where the image is not zoomed in or out.
FIG. 17 is a set of diagrams illustrating examples of an image displayed by the visual presentation apparatus of the eighth embodiment in a case where the image is zoomed in and out.
FIG. 18 is a diagram illustrating an exemplary configuration of a remote machine manipulation system according to a ninth embodiment.

### Description of Embodiments

Hereinafter, a remote machine manipulation system, a visual presentation apparatus, a visual presentation method, and a program according to embodiments will be described in detail with reference to the drawings.

### First Embodiment.

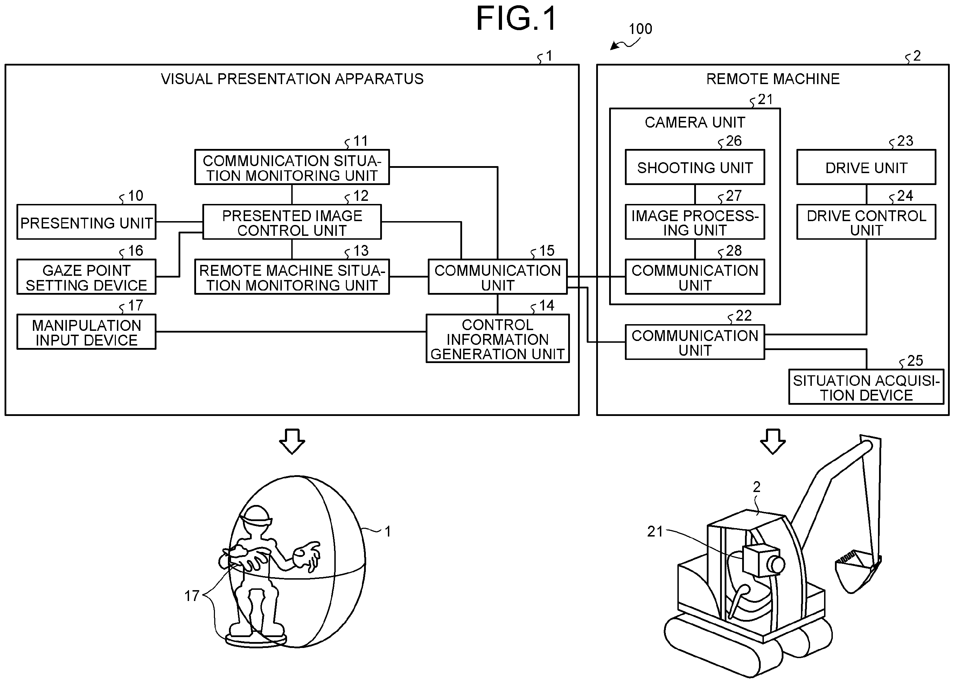

FIG. 1 is a diagram illustrating an exemplary configuration of a remote machine manipulation system according to a first embodiment. A remote machine manipulation system 100 of the present embodiment includes a visual presentation apparatus 1 and a remote machine 2. The remote machine 2 is a machine that can be remotely manipulated by an operator who is at a place away from the remote machine 2. The visual presentation apparatus 1 presents the operator with an image acquired by the remote machine 2.

For example, the remote machine 2 may be a working machine that performs work such as construction, assembly, conveyance, packaging, or assistance, may be a mobile machine such as a vehicle or a drone (an unmanned aerial vehicle, an underwater drone, or a space drone), or may be a machine that performs both work and movement.

The remote machine 2 includes, as illustrated in FIG. 1, a camera unit 21, a communication unit 22, a drive unit 23, a drive control unit 24, and a situation acquisition device 25. Note that, as illustrated in the lower part of FIG. 1, the remote machine 2 is a construction machine, for example, but is not limited thereto as described above.

The camera unit 21 includes a shooting unit 26, an image processing unit 27, and a communication unit 28. The shooting unit 26 is a camera that shoots an image of the remote machine 2 remotely manipulated, and specifically, for example, is a monocular camera. The communication unit 28 communicates with the visual presentation apparatus 1. The image processing unit 27 adjusts the resolution, the frame rate, and the like of the image shot by the shooting unit 26 on the basis of an instruction from the visual presentation apparatus 1 received via the communication unit 28, and transmits the adjusted image to the visual presentation apparatus 1 via the communication unit 28.

The communication unit 22 communicates with the visual presentation apparatus 1. For example, the communication unit 22 receives control information for controlling the remote machine 2 from the visual presentation apparatus 1, and outputs the received control information to the drive control unit 24. The drive control unit 24 controls the drive unit 23 on the basis of the control information. The drive unit 23 is various actuators and includes, for example, a motor for operating an arm, a manipulator, and the like of the remote machine 2, a motor for moving the remote machine 2, and the like.

The situation acquisition device 25 is, for example, an acceleration sensor, a force sensor, an arm, or the like, or may be a camera provided on the arm, the manipulator, or the like. The situation acquisition device 25 detects an operating situation of the remote machine 2 and outputs a detection result to the communication unit 22. For example, the communication unit 22 transmits the detection result detected by the situation acquisition device 25 to the visual presentation apparatus 1. Note that the detection result acquired by the situation acquisition device 25 is, as described later, used for determining an operating mode indicating the operating situation of the remote machine 2. The operating mode indicating the operating situation can be represented by a combination of a work mode and a speed of movement of the remote machine 2. The work mode is determined by, for example, the type of work situation such as work in which the operator gazes at a particular part or work in which the operator grasps a wider range. In a case where the operating mode is manually set by the operator, the situation acquisition device 25 need not be provided. Moreover, as described later, also in a case where the operating mode is determined from the image acquired by the camera unit 21, the situation acquisition device 25 need not be provided.

Note that, in FIG. 1, the remote machine 2 includes both the communication unit 22 and the communication unit 28 in the camera unit 21, but the communication unit 28 in the camera unit 21 need not be provided, in which case the image acquired by the camera unit 21 may be transmitted to the visual presentation apparatus 1 via the communication unit 22, and the instruction from the visual presentation apparatus 1 to the camera unit 21 may be received via the communication unit 22.

Also in FIG. 1, the camera unit 21 is provided in the remote machine 2, but may be provided separately from the remote machine 2. Furthermore, a plurality of the camera units 21 may be provided, and the visual presentation apparatus 1 may select which of the camera units 21 presents the image acquired to the operator, or the operator may select which of the camera units 21 presents the image acquired to the operator.

As illustrated in FIG. 1, the visual presentation apparatus 1 receives the image shot by the shooting unit 26 that shoots the image of the remote machine 2, and displays the received image to present the operator who manipulates the remote machine 2 with the image. Specifically, the visual presentation apparatus 1 communicates with the remote machine 2 to acquire the image shot at a remote place where the remote machine 2 is installed, and remotely manipulate the remote machine 2. A communication line between the remote machine 2 and the visual presentation apparatus 1 may be a wireless line, a wired line, or a mixture of a wireless line and a wired line. For example, a communication line such as 5th Generation (5G: 5th generation mobile communication system) or Beyond 5G that achieves high-capacity, low-latency transmission may be used, or a communication line other than these may be used. Furthermore, the communication line may be changed with a change in the position of the remote machine 2 or the visual presentation apparatus 1. For example, with the movement of the remote machine 2, the communication line used may be switched during the movement.

The visual presentation apparatus 1 receives the image from the camera unit 21 of the remote machine 2 via the communication line, and presents the received image to the operator by displaying the received image on a presenting unit 10, such as a monitor, illustrated in FIG. 1. Meanwhile, the visual presentation apparatus 1 cannot always communicate with the camera unit 21 in a broadband and stable communication environment. In the present embodiment, an image transmission rate (a transmission rate), which is a data amount per unit time of an image, is controlled in accordance with a communication situation in consideration of characteristics of human vision. As a result, an image suitable for the communication situation can be provided to the operator. Note that the image suitable for the communication situation is, for example, an image that avoids a decrease in operator's visibility by considering the characteristics of human vision while reducing the communication band.

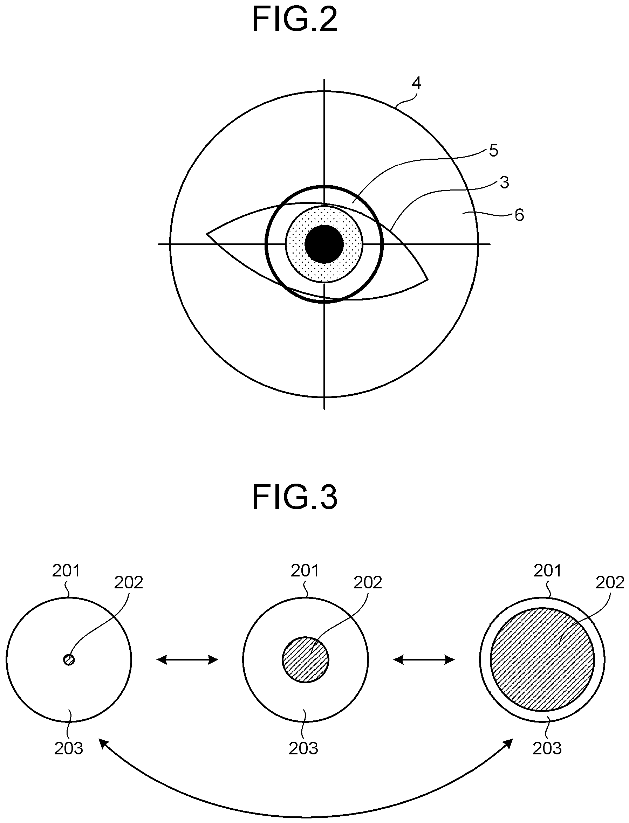

FIG. 2 is a diagram for explaining the characteristics of human vision. As illustrated in FIG. 2, generally in human vision, a high-definition image is required in a region corresponding to a central field of view 5 corresponding to the vicinity of the center of a field of view 4 of a human eye 3, and a peripheral field of view 6 outside the central field of view 5 is less affected by the resolution than the central field of view 5 is. That is, if the image corresponding to the central field of view 5 is maintained at a high resolution, the operator can perceive the image as a natural image even when the resolution of the image corresponding to the peripheral field of view 6 is decreased to be lower than the resolution of the image corresponding to the central field of view 5. Therefore, by decreasing the resolution of the image corresponding to the peripheral field of view 6 to be lower than the resolution of the image corresponding to the central field of view 5, it is possible to present a natural image to the operator while reducing the band used for transmission of the image.

Moreover, the size of the central field of view 5 varies depending on the situation. For example, the size of the central field of view 5 varies in accordance with work performed by a person or the speed of movement of the person. Therefore, also in presenting the image to the operator, it is desirable to set the range of the image corresponding to the central field of view 5 in accordance with the work performed by the person or the speed of movement of the person. Thus, in the present embodiment, for example, a mode corresponding to an operating situation such as work performed by the remote machine 2 or a speed of movement of the remote machine 2 is determined as the operating mode, and the size of the image corresponding to the central field of view 5 is set in accordance with the operating mode.

FIG. 3 is a diagram illustrating examples of an image display region of the present embodiment corresponding to each of the central field of view and the peripheral field of view. As illustrated in FIG. 3, in the present embodiment, an image display region 201 presented by the visual presentation apparatus 1, that is, displayed by the visual presentation apparatus 1 is divided into a central field-of-view region 202 in which a central field-of-view image corresponding to the central field of view 5 is displayed, and a peripheral field-of-view region 203 in which a peripheral field-of-view image corresponding to the peripheral field of view 6 is displayed. As illustrated in FIG. 3, the size of the central field-of-view region 202 is changed in accordance with the work mode, that is, in accordance with the operating situation of the remote machine 2. Note that, in FIG. 3, the presenting unit 10 of the visual presentation apparatus 1 is assumed to be a dome-shaped projection device, and the image display region 201 is indicated by a circle (a range within a predetermined angle from the direction of the line of sight of the operator), but the image display region 201 is not limited to this shape. For example, the image display region 201 may be rectangular, and even in the case where the image display region 201 is rectangular, the central field-of-view region 202 has a circular shape.

Note that although FIG. 3 illustrates the case where the direction of the line of sight of the operator coincides with the center of the image display region 201, the location of the central field-of-view region 202 moves depending on where in the image display region 201 the direction of the line of sight of the operator corresponds. The direction of the line of sight of the operator is set by the operator as a gaze point, for example, as described later. Note that depending on a condition under which the visual presentation apparatus 1 is used, the gaze point may be determined in advance. For example, in an environment in which the position of the face of the operator is roughly determined and the position of a target to be worked is also determined, the gaze point may be determined in advance.

In the present embodiment, the visual presentation apparatus 1 determines an image parameter related to the image in accordance with the communication situation while considering the above-described characteristics of human vision. The image parameter includes, for example, at least one of the resolution, the frame rate, the color, and the position and size of the central field-of-view region 202. For example, in a situation where the operator focuses attention on a specific object in the image obtained by the camera unit 21, the operator can perceive the image as a natural image even when the image transmission rate of the peripheral field-of-view image is decreased by reducing the resolution of the peripheral field-of-view image to be lower than the resolution of the central field-of-view image or limiting information on the color. Therefore, the visual presentation apparatus 1 monitors the communication situation to display a high-resolution color image in the entire image display region 201 at a high frame rate in a case where a sufficient transmission speed is obtained, for example, and when the transmission speed is reduced, the visual presentation apparatus 1 decreases the image transmission rate by changing at least one of the resolution, the frame rate, the color, and the size of the central field-of-view region 202. This makes it possible to present the operator with a natural image while reducing the band used for the transmission of the image.

The description refers back to FIG. 1. The visual presentation apparatus 1 includes the presenting unit 10, a communication situation monitoring unit 11, a presented image control unit 12, a remote machine situation monitoring unit 13, a control information generation unit 14, a communication unit 15, a gaze point setting device 16, and a manipulation input device 17.

The communication unit 15 communicates with the remote machine 2. For example, the communication unit 15 receives an image from the remote machine 2 and transmits control information for controlling the remote machine 2 to the remote machine 2. Moreover, when receiving a detection result by the situation acquisition device 25 of the remote machine 2, the communication unit 15 outputs the received detection result to the presented image control unit 12. The communication situation monitoring unit 11 monitors a communication situation of the communication unit 15, and notifies the presented image control unit 12 of information indicating communication information. The communication situation monitoring unit 11 may for example monitor a transmission speed (communication band) of the communication unit 15, monitor communication quality such as a bit error rate or received signal strength, or monitor both. In addition, the communication situation monitoring unit 11 monitors at least communication situations of communication in a direction of receiving information from the remote machine 2 and downstream communication of the visual presentation apparatus 1. That is, the communication situation monitoring unit 11 detects at least the communication situation in the reception of the image. The communication situation monitoring unit 11 may monitor the communication situations of both the downstream communication and the upstream communication. Note that the communication situation detected by the communication situation monitoring unit 11 is preferably an accurate measurement value, but may be an estimated value in a case where it is difficult to detect an accurate measurement value.

The remote machine situation monitoring unit 13 detects an operating situation of the remote machine 2. The remote machine situation monitoring unit 13 detects, for example, at least one of the speed of movement of the remote machine 2 and the distance between the remote machine 2 and a target manipulated by the remote machine 2. Specifically, the remote machine situation monitoring unit 13 receives, via the communication unit 15, an image shot by the shooting unit 26 of the camera unit 21, monitors the situation of the remote machine 2 using the received image, and notifies the presented image control unit 12 of information indicating the situation of the remote machine 2. The information indicating the situation of the remote machine 2 is, for example, information indicating the speed of movement of the remote machine 2 estimated from the image, the position of a work target of the remote machine 2 estimated from the image, and the like. The work target may, for example, be set in advance or be extracted by the remote machine situation monitoring unit 13 on the basis of a condition that is specified. For example, the remote machine situation monitoring unit 13 detects the position of the work target by detecting the work target from the image on the basis of a picture indicating the work target. Also, in a case where the distance between the work target and the remote machine 2 can be calculated on the basis of the size of the work target detected or the like, the remote machine situation monitoring unit 13 may estimate the distance and notify the presented image control unit 12 of the estimated distance as information indicating the situation of the remote machine 2. Note that the situation acquisition device 25 in the remote machine 2 is another example of a remote machine monitoring unit. That is, the remote machine monitoring unit that detects the operating situation of the remote machine 2 may be provided in the remote machine 2. The remote machine monitoring unit may also be provided in the visual presentation apparatus 1. Note that the remote machine situation monitoring unit 13 and the situation acquisition device 25 may detect, as the operating situation, a relative distance and a relative speed with respect to a mobile body (not a target to be manipulated) or an obstacle (including the remote machine 2 itself during manipulation) around the remote machine 2 performing manipulation.

The gaze point setting device 16 sets the gaze point of the operator. Specifically, the gaze point setting device 16 receives an input of the gaze point from the operator, and notifies the presented image control unit 12 of information indicating the input gaze point. The gaze point setting device 16 may be, for example, input means such as a joystick, a touch pad, a button, a keyboard, a mouse, or a game controller, or may be a device that detects a gesture of the operator on the basis of an image of the operator or a movement of a muscle of the operator and receives an input. The gaze point setting device 16 may be any input means that can receive the input from the operator, and is not limited to the above-described example. The gaze point may be designated as a position in the image display region 201 displayed by presenting unit 10, or may be designated as a target in the image displayed in the image display region 201. In the case where the gaze point is designated as the target, the image processing unit 27 of the camera unit 21 receives the information indicating the gaze point from the visual presentation apparatus 1 via the communication unit 28, extracts the target from the image, and determines the position of the gaze point.

The presented image control unit 12 sets the operating mode and determines the image parameter to be instructed to camera unit 21 by using the set operating mode, the information indicating the communication situation received from the communication situation monitoring unit 11, and the information indicating the gaze point received from the gaze point setting device 16. For example, the presented image control unit 12 sets the operating mode by using at least one of the detection result transmitted by the situation acquisition device 25 and received from the communication unit 15 and the information indicating the situation of the remote machine 2 received from the remote machine situation monitoring unit 13. Moreover, the operating mode may be input from the operator via the gaze point setting device 16 or the manipulation input device 17, and the operating mode may be set on the basis of the input. The presented image control unit 12 determines the central field-of-view region 202 on the basis of the gaze point set by the gaze point setting device. That is, the presented image control unit 12 determines the central field-of-view region 202 and the peripheral field-of-view region 203 in the display region in which the image is displayed. Furthermore, on the basis of the communication situation detected by the communication situation monitoring unit 11, the presented image control unit 12 determines the image parameter related to the transmission rate (image transmission rate) of the central field-of-view image and the peripheral field-of-view image. The image parameter related to the transmission rate is a parameter that affects the transmission rate among the image parameters.

The image parameters include, for example, at least one of the resolution, the frame rate, the color, and the position and size of the central field-of-view region 202, as described above. The presented image control unit 12 outputs the determined image parameter to the communication unit 15, and the communication unit 15 transmits the image parameter received from the presented image control unit 12 to the camera unit 21. Note that, as for these image parameters, only the parameter to be changed may be transmitted when being changed, all the parameters may be transmitted when any of the parameters is changed, or all the parameters may be periodically transmitted. The camera unit 21 transmits the image to the visual presentation apparatus 1 in accordance with the image parameter instructed from the presented image control unit 12. The presented image control unit 12 receives the image from the camera unit 21 via the communication unit 15, and causes the presenting unit 10 to display the image.

The presenting unit 10 is a device that displays the image shot by the camera unit 21, and is, for example, a dome monitor, a display, a head mounted display, a terminal such as a tablet or a smartphone, a projector and a screen, or the like, but is not limited thereto as long as the image can be displayed. When an image presenting device with visibility in the vertical direction such as the dome monitor is used as the presenting unit 10, the operator can secure a field of view in the vertical direction so that, for example, in a case where the remote machine 2 is a mobile machine, it is easy to check the periphery of a lower portion of the remote machine 2, that is, the foot of the remote machine 2, which is useful in supporting remote manipulation for moving the remote machine 2.

The manipulation input device 17 is input means that receives an input for manipulation of the remote machine 2 from the operator, and may be input means that receives the manipulation by detecting a gesture of the operator or may be input means such as a joystick, a touch pad, a button, a keyboard, a mouse, or a game controller. The manipulation input device 17 outputs manipulation information indicating the manipulation received from the operator to the control information generation unit 14. Although FIG. 1 illustrates the gaze point setting device 16 separately from the manipulation input device 17, the gaze point setting device 16 may be the same device as the manipulation input device 17 or may be a part of the manipulation input device 17.

The control information generation unit 14 uses the manipulation information received from the manipulation input device 17 to generate control information for controlling the operation of the remote machine 2, and outputs the generated control information to the communication unit 15. The control information is transmitted to the remote machine 2 by the communication unit 15.

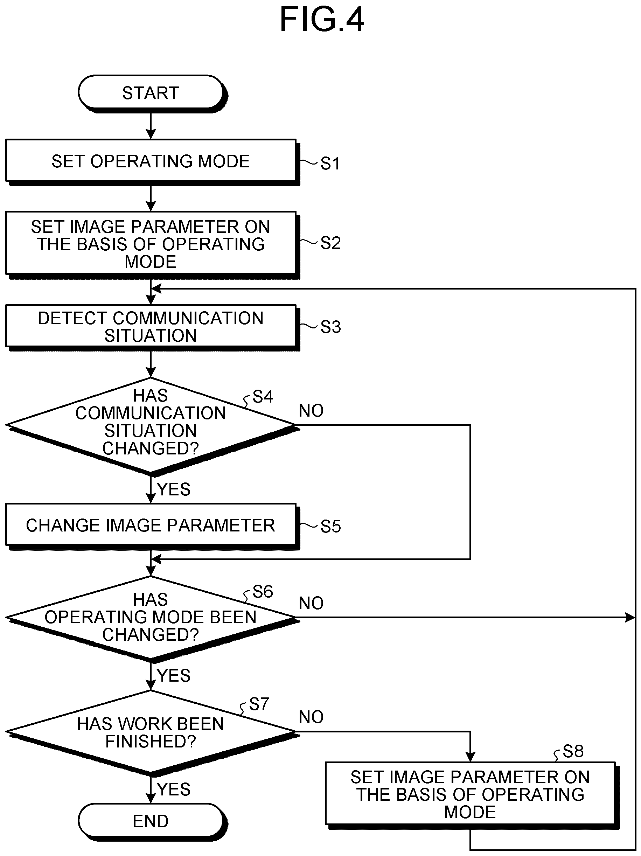

Next, image control of the present embodiment will be described. FIG. 4 is a flowchart illustrating an example of an image control processing procedure in the visual presentation apparatus 1 of the present embodiment. As illustrated in FIG. 4, the visual presentation apparatus 1 sets the operating mode (step S1). Specifically, as described above, for example, the presented image control unit 12 may set the operating mode by using at least one of the detection result transmitted from the situation acquisition device 25 and the information indicating the situation of the remote machine 2 received from the remote machine situation monitoring unit 13, or the operating mode may be set by operator's input.

The visual presentation apparatus 1 sets the image parameters on the basis of the operating mode (step S2). Specifically, the presented image control unit 12 sets the image parameters on the basis of the operating mode. For example, the presented image control unit 12 holds initial values of the image parameters for each operating mode as image setting information, and sets the image parameters corresponding to the operating mode with reference to the image setting information.

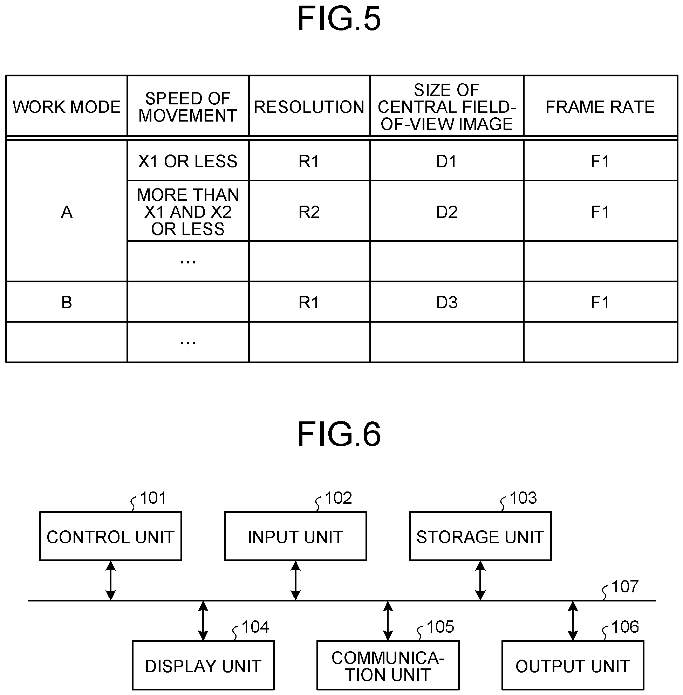

FIG. 5 is a table illustrating an example of the image setting information of the present embodiment. In the example illustrated in FIG. 5, each row of the image setting information indicates one operating mode, the operating mode is indicated by a combination of the work mode and the speed of movement (speed of movement of the remote machine 2), and the image setting information includes the initial values of the image parameters corresponding to each operating mode. In FIG. 5, as the initial values of the image parameters, the image setting information includes the resolution, the size of the central field-of-view image (the size of the central field-of-view region 202), and the frame rate. The image parameters included in the image setting information are not limited to these. In addition, the initial values of the image parameters may include, as information regarding color, information indicating whether the image is a color image or a monochrome image. Note that the image parameters in the image setting information are set to values corresponding to, for example, a case where the communication situation is the best, that is, a case where there is no restriction on the transmission speed. Here, the initial values of the resolution, the frame rate, and the like are assumed to be the same between the central field-of-view region 202 and the peripheral field-of-view region 203, but the initial values may be different between the central field-of-view region 202 and the peripheral field-of-view region 203. In this case, the image setting information includes respective values for the central field-of-view region 202 and the peripheral field-of-view region 203 as the image parameters. The image setting information is determined, for example, by experiment or the like for each operating mode such that the operator feels the ease of performing work, but the method of determining the image setting information is not limited to this example. For example, the image setting information is also determined by learning from data being manipulated.

The description refers back to FIG. 4. The visual presentation apparatus 1 detects the communication situation (step S3). Specifically, the communication situation monitoring unit 11 detects the communication situation and notifies the presented image control unit 12 of the detection result. Next, the visual presentation apparatus 1 determines whether or not the communication situation has changed (step S4). Specifically, the presented image control unit 12 determines whether or not the communication situation has changed. Note that, in the first round of step S4, the image parameters are set assuming that the communication situation is the best, and therefore the presented image control unit 12 determines whether or not the communication situation has changed from that when the communication situation is the best. In the second and subsequent rounds of step S4, the presented image control unit 12 determines whether or not the communication situation has changed from that at the time of the determination in the previous round of step S4. The determination as to whether or not the communication situation has changed is made on the basis of, for example, whether or not the transmission speed has changed by a certain amount or more. For example, the transmission speed may be defined in a range of a plurality of stages such as level one in a case where the transmission speed is Z1 (Mbps) or more and less than Z2 (Mbps), and level two in a case where the transmission speed is Z2 (Mbps) or more and less than Z3 (Mbps), and the presented image control unit 12 may determine that the communication situation has changed in a case where the level has changed.

In a case where the communication situation has changed (Yes in step S4), the visual presentation apparatus 1 changes the image parameters (step S5). Specifically, the presented image control unit 12 changes the image parameters so as to obtain the image parameters corresponding to the communication situation. The image parameters to be changed include, for example, at least one of the resolution of the peripheral field-of-view image, the frame rate of the peripheral field-of-view image, the color of the peripheral field-of-view region, and the size of the central field-of-view region 201. For example, in each operating mode, the priority for change is determined for each of these image parameters, and the presented image control unit 12 changes the image parameters in descending order of the priority for change until achieving the image transmission rate possible at the current transmission speed. For example, in a case where the priority for changing the resolution is the highest in a certain operating mode, the presented image control unit 12 reduces the resolution of the peripheral field-of-view image so as to achieve the image transmission rate possible at the current transmission speed. Note that a lower limit value of each of the image parameters at the time of reducing the image parameter is determined beforehand, and in a case where the image transmission rate that is possible at the current transmission speed is not achieved even when the resolution of the peripheral field-of-view image is reduced to the lower limit value, the presented image control unit 12 changes the image parameter having the next highest priority (priority for change). As described above, by reducing the image transmission rate by changing the image parameters in descending order of the priority for change, the presented image control unit 12 determines the image parameters so as to achieve the image transmission rate corresponding to the communication situation. Note that, in a case where the communication situation has changed for the better, the presented image control unit 12 may similarly change the image parameters such that the image transmission rate increases so as to achieve the image transmission rate corresponding to the communication situation.

Next, the visual presentation apparatus 1 determines whether or not the operating mode has been changed (step S6). Specifically, the presented image control unit 12 determines the operating mode by using at least one of the detection result transmitted from the situation acquisition device 25 and the information indicating the situation of the remote machine 2 received from the remote machine situation monitoring unit 13, and determines whether or not the determined operating mode is different from the operating mode that is currently set. Alternatively, the presented image control unit 12 determines whether or not the operating mode input from the operator is different from the operating mode that is currently set.

In a case where the operating mode has not been changed (No in step S6), the presented image control unit 12 performs the processing from step S3 again. In a case where the operating mode has been changed (Yes in step S6), the presented image control unit 12 determines whether or not the work has been finished (step S7). Specifically, the presented image control unit 12 may determine that the work has been finished in a case where the operator has made an input indicating the end of the work, or in a case where the operating mode includes a mode indicating the end of the work and the operating mode has been changed to the mode indicating the end of the work, the presented image control unit 12 may determine that the work has been finished.

In a case where the work has not been finished (No in step S7), the presented image control unit 12 sets the image parameters on the basis of the operating mode (step S8), and performs the processing from step S3 again. In step S8, specifically, as in step S2, the presented image control unit 12 may set the image parameters on the basis of the image setting information, or may change some of the image parameters indicated by the image setting information. For example, in step S8, among the image parameters indicated by the image setting information, only the size of the central field-of-view region 202 may be changed to a value corresponding to the operating mode after the change.

In a case where the work has been finished (Yes in step S7), the presented image control unit 12 ends the processing. Furthermore, in a case where the determination is "No" in step S4, the presented image control unit 12 advances the processing to step S6.

By the above processing, the image parameters corresponding to the operating mode and the communication situation are set. Note that the processing illustrated in FIG. 4 is an example, and the specific processing procedure is not limited to the example illustrated in FIG. 4. Moreover, in the above-described example, the image setting information includes the initial values of the image parameters in the case where the communication situation is the best for each operating mode, but the image setting information may be determined for each communication situation. For example, the image setting information may be determined for each level of the communication situation described above, and in step S2, the presented image control unit 12 may set the image parameters by using the image setting information corresponding to the communication situation.

Note that, in the example described above, the image obtained by shooting the remote machine 2 has been described as an example, but the image presented by the visual presentation apparatus 1 is not limited to the image obtained by shooting the remote machine 2, and may be a landscape, a person, an animal, or the like short by a camera. For example, the camera may be placed on a shoulder of a person, in a forest, in a river, in outer space, or the like, and the communication unit 15 of the visual presentation apparatus 1 may receive an image from the camera. Also in this case, for example, the image parameters of the central field-of-view image and the peripheral field-of-view image are set in accordance with the communication situation, such as reducing the image transmission rate of the peripheral field-of-view image when the communication situation gets worse, whereby an appropriate image can be presented in accordance with the communication situation. In a case where the camera is placed on the shoulder of a person or the like, the image parameters of the central field-of-view image and the peripheral field-of-view image may be determined also in accordance with the speed of movement of the person.

Next, a hardware configuration of the visual presentation apparatus 1 of the present embodiment will be described. As the visual presentation apparatus 1 of the present embodiment, a computer system runs a program that is a computer program describing processing of the visual presentation apparatus 1, so that the computer system functions as the visual presentation apparatus 1. FIG. 6 is a diagram illustrating an exemplary configuration of the computer system that implements the visual presentation apparatus 1 of the present embodiment. As illustrated in FIG. 6, the computer system includes a control unit 101, an input unit 102, a storage unit 103, a display unit 104, a communication unit 105, and an output unit 106, which are connected via a system bus 107. The control unit 101 and the storage unit 103 constitute a processing circuitry.

In FIG. 6, the control unit 101 is, for example, a processor such as a central processing unit (CPU), and executes the program describing the processing of the visual presentation apparatus 1 of the present embodiment. Note that a part of the control unit 101 may be implemented by dedicated hardware such as a graphics processing unit (GPU) or a field-programmable gate array (FPGA). The input unit 102 may be, as described above, for example, the input means such as the joystick, the touch pad, the button, the keyboard, the mouse, or the game controller, or may be input means that detects a gesture of the operator on the basis of an image of the operator or a movement of a muscle of the operator and receives an input. The storage unit 103 includes various memories such as a random access memory (RAM) and a read only memory (ROM) as well as a storage device such as a hard disk, and stores the program to be executed by the control unit 101, necessary data obtained in the course of processing, and the like. The storage unit 103 is also used as a temporary storage area for the program. The display unit 104 is, as described above, for example, the dome monitor, the display, the head mounted display, the terminal such as the tablet or the smartphone, the projector and the screen, or the like. Note that the display unit 104 and the input unit 102 may be integrated and implemented by a touch panel or the like. The communication unit 105 is a receiver and a transmitter that perform communication processing. The output unit 106 is a speaker and the like. Note that FIG. 6 illustrates an example, which does not limit the configuration of the computer system.

Here, a description will be given of an exemplary operation of the computer system for enabling execution of the program of the present embodiment. In the computer system having the above configuration, the computer program is installed to the storage unit 103 from, for example, a Compact Disc (CD)-ROM or a Digital Versatile Disc (DVD)-ROM set in a CD-ROM drive or a DVD-ROM drive not illustrated. When executed, the program read from the storage unit 103 is stored in a main storage area of the storage unit 103. In this state, the control unit 101 executes the processing as the visual presentation apparatus 1 of the present embodiment in accordance with the program stored in the storage unit 103.

Note that the above description provides the program describing the processing of the visual presentation apparatus 1 by using the CD-ROM or DVD-ROM as a recording medium, but depending on the configuration of the computer system, the capacity of the program provided, and the like, for example, the program may be provided for use through a transmission medium such as the Internet.

For example, the program of the present embodiment causes the visual presentation apparatus 1 to execute: a step of detecting the communication situation in receiving an image; and a step of dividing the display region in which the image is displayed, into the central field-of-view region 202 and the peripheral field-of-view region 203, and determining, on the basis of the detected communication situation, the image parameters related to the transmission rate of the central field-of-view image displayed in the central field-of-view region 202 and the peripheral field-of-view image displayed in the peripheral field-of-view region 203.

The communication situation monitoring unit 11, the presented image control unit 12, the remote machine situation monitoring unit 13, and the control information generation unit 14 illustrated in FIG. 1 are implemented when the computer program stored in the storage unit 103 illustrated in FIG. 6 is executed by the control unit 101 illustrated in FIG. 6. The communication situation monitoring unit 11, the presented image control unit 12, the remote machine situation monitoring unit 13, and the control information generation unit 14 illustrated in FIG. 1 are implemented by also using the storage unit 103 illustrated in FIG. 6. The communication unit 15 illustrated in FIG. 1 is implemented by the communication unit 105 illustrated in FIG. 6. The gaze point setting device 16 and the manipulation input device 17 illustrated in FIG. 1 are implemented by the input unit 102 illustrated in FIG. 6. The presenting unit 10 illustrated in FIG. 1 is implemented by the display unit 104 illustrated in FIG. 6.

Note that, in the example illustrated in FIG. 1, the gaze point setting device 16, the manipulation input device 17, and the presenting unit 10 are included in the visual presentation apparatus 1, but at least one of the gaze point setting device 16, the manipulation input device 17, and the presenting unit 10 need not be included in the visual presentation apparatus 1. In this case, the visual presentation apparatus 1 is connected to at least one of the gaze point setting device 16, the manipulation input device 17, and the presenting unit 10 not included in the visual presentation apparatus 1 to exchange information therewith. Moreover, in the example illustrated in FIG. 1, the communication situation monitoring unit 11 and the presented image control unit 12 are included in the visual presentation apparatus 1, but either one or both of them may be included in the remote machine 2.

The image processing unit 27 of the remote machine 2 illustrated in FIG. 1 is implemented by, for example, the processing circuitry including the control unit 101 and the storage unit 103 illustrated in FIG. 6. This processing circuitry is also a computer system. The communication unit 22 and the communication unit 28 illustrated in FIG. 1 are each a receiver and a transmitter.

As described above, the visual presentation apparatus 1 of the present embodiment divides the image display region 201 into the central field-of-view region 202 and the peripheral field-of-view region 203, and determines the image parameters displayed in each of the regions in accordance with the operating situation and the communication situation of the remote machine 2. Therefore, the image suitable for the communication situation can be presented. In particular, in a case where the actual transmission speed is a constant speed compared to the image transmission rate corresponding to the image parameters currently set, the image parameters are determined so as to decrease the image transmission rate of the peripheral field-of-view image, so that it is possible to present the operator with a natural image while reducing the band used for the transmission of the image.

### Second Embodiment.

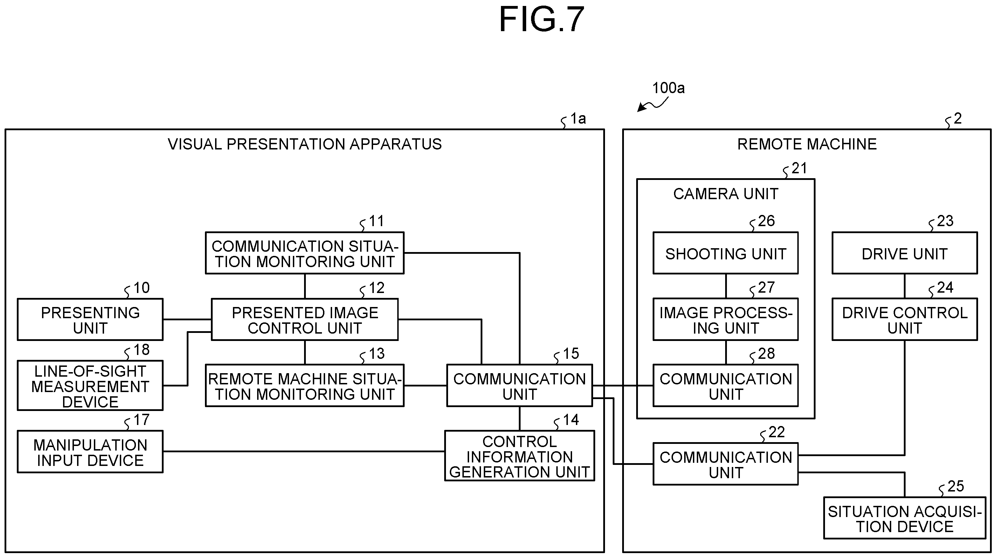

FIG. 7 is a diagram illustrating an exemplary configuration of a remote machine manipulation system according to a second embodiment. A remote machine manipulation system 100a of the present embodiment includes a visual presentation apparatus 1a and the remote machine 2 similar to that of the first embodiment. A component having a similar function to the corresponding component in the first embodiment will be denoted by the reference numeral identical to that of the component in the first embodiment, and a redundant description will be omitted. Hereinafter, differences from the first embodiment will mainly be described.

The visual presentation apparatus 1a is similar to the visual presentation apparatus 1 of the first embodiment except for including a line-of-sight measurement device 18, which is another example of the gaze point setting device, instead of the gaze point setting device 16. The line-of-sight measurement device 18 as an example of the gaze point setting device measures a line of sight (a direction of the line of sight) of the operator and outputs a measurement result to the presented image control unit 12. The line of sight is information indicating a gaze point, and the presented image control unit 12 determines the gaze point on the basis of the measurement result and determines the central field-of-view region 202 using the gaze point. Note that the line-of-sight measurement device 18 need not be included in the visual presentation apparatus 1a, in which case the visual presentation apparatus 1a may acquire the measurement result from the line-of-sight measurement device 18. In addition, the visual presentation apparatus 1a may also include the gaze point setting device 16 to be able to switch between the gaze point setting device 16 and the gaze/line-of-sight measurement device 18. The operation of the present embodiment other than that described above is similar to that of the first embodiment.

The visual presentation apparatus 1a of the present embodiment determines the gaze point using the line-of-sight measurement device 18, so that the operator does not need to set the gaze point and can have a reduced load.

### Third Embodiment.

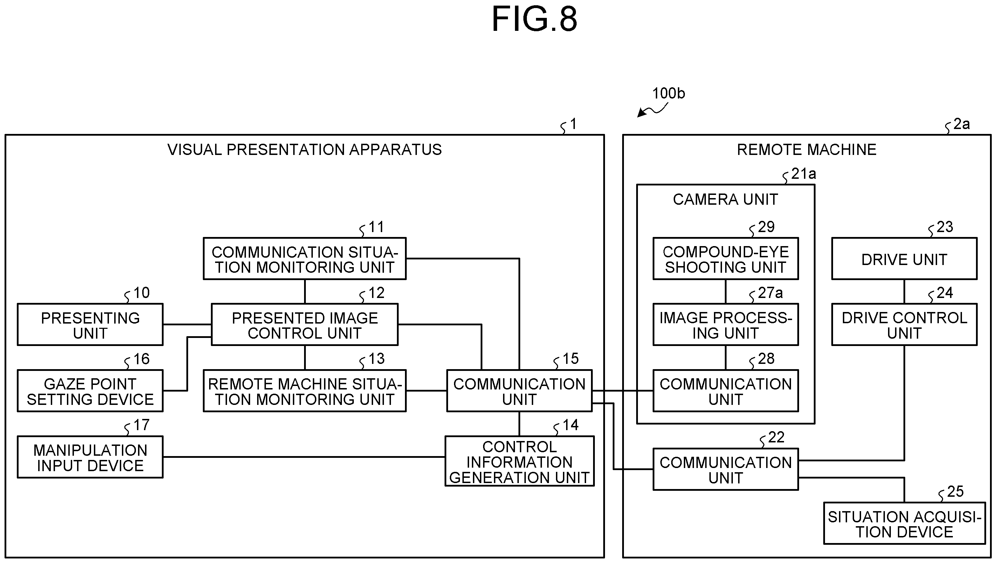

FIG. 8 is a diagram illustrating an exemplary configuration of a remote machine manipulation system according to a third embodiment. A remote machine manipulation system 100b of the present embodiment includes the visual presentation apparatus 1 similar to that of the first embodiment and a remote machine 2a. A component having a similar function to the corresponding component in the first embodiment will be denoted by the reference numeral identical to that of the component in the first embodiment, and a redundant description will be omitted. Hereinafter, differences from the first embodiment will mainly be described.

The remote machine 2a is similar to the remote machine 2 of the first embodiment except for including a camera unit 21a instead of the camera unit 21. The camera unit 21a is similar to the camera unit 2 of the first embodiment except for including a compound-eye shooting unit 29 and an image processing unit 27a instead of the shooting unit 26 and the image processing unit 27. The compound-eye shooting unit 29 is a compound-eye camera. The compound-eye shooting unit 29 is, for example, a trinocular camera and can provide a stereoscopic image and a planar image by shooting a left-eye image, a right-eye image, and a planar image. Alternatively, the compound-eye shooting unit 29 may shoot the left-eye image and the right-eye image, and the planar image may be created using the left-eye image and the right-eye image. The communication unit 28 transmits the images shot by the compound-eye shooting unit 29 to the visual presentation apparatus 1.

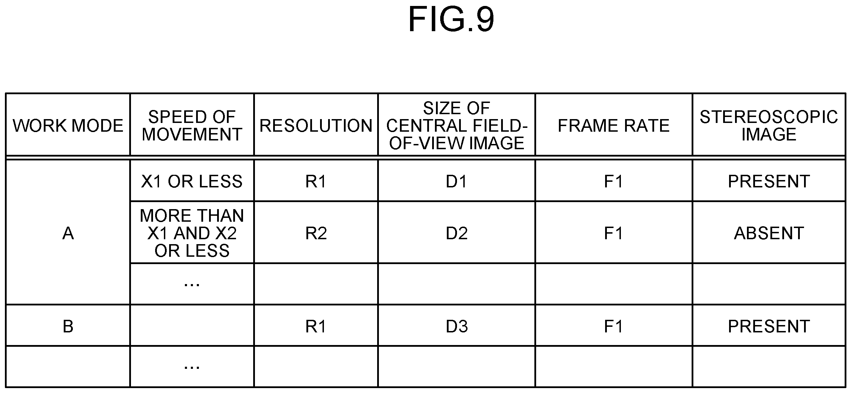

In the present embodiment, the image parameters can include whether or not stereoscopic vision is provided, that is, whether the stereoscopic image or the planar image is used. Specifically, for example, the image parameters may include information indicating whether or not each of a central field-of-view image and a peripheral field-of-view image uses the stereoscopic image. FIG. 9 is a table illustrating an example of image setting information of the present embodiment. For example, in a case where the remote machine 2a operates in proximity to an object, the use of the stereoscopic image allows the operator to easily grasp the distance between the remote machine 2a and the object, and to easily perform work of avoiding interference between the remote machine 2a and the object. On the other hand, in a case where the remote machine 2a is a vehicle or the like and is moving at a high speed, the need for the stereoscopic image is low. Moreover, for example, depending on the operating mode, when the stereoscopic image is used as the central field-of-view image, the operator can perceive the image as a natural image without feeling odd even when the peripheral field-of-view image is the planar image.

In the present embodiment, the presented image control unit 12 may change, as the image parameter, whether or not the stereoscopic vision is provided depending on the communication situation. For example, in a case where the transmission speed is reduced while the stereoscopic image is displayed across the image display region 201, the image transmission rate of the peripheral field-of-view image may be reduced by changing the peripheral field-of-view image to the planar image. Moreover, the presented image control unit 12 may add, to the image parameters described in the first embodiment, whether or not the stereoscopic vision is provided, determine the priority for change of each of the image parameters as described in the first embodiment, and change the image parameters in descending order of the priority so as to achieve the image transmission rate corresponding to the communication situation.

When instructed to change whether or not the stereoscopic vision is provided from the visual presentation apparatus 1, the image processing unit 27a of the camera unit 21a adjusts the image that is output to the communication unit 28 on the basis of the instruction. For example, the image processing unit 27a receives an instruction to use the stereoscopic image as the central field-of-view image and use the planar image as the peripheral field-of-view image, thereby using the stereoscopic image in a part corresponding to the central field-of-view image and using the planar image in a part corresponding to the peripheral field-of-view image. In addition, as described above, the compound-eye shooting unit 29 may shoot the left-eye image and the right-eye image, and the image processing unit 27a may use the left-eye image and the right-eye image to estimate and create the planar image corresponding to an image between the left-eye image and the right-eye image. Alternatively, the compound-eye shooting unit 29 may include a compound-eye camera for a stereoscopic image and a monocular camera for a planar view, and the image processing unit 27a may use images shot by these two types of cameras as the stereoscopic image and the planar image, respectively.

As the presenting unit 10 of the visual presentation apparatus 1, an anaglyph, deflection glasses, active shutter glasses, a head-mounted display, a lenticular, or the like may be used. A plurality of camera stereoscopic images may include an image synthesized by an image synthesizing function. The operation of the present embodiment other than that described above is similar to that of the first embodiment.

The remote machine manipulation system 100b of the present embodiment uses the compound-eye shooting unit 29, and thus can present the stereoscopic image to the operator. Moreover, by using the stereoscopic image as the central field-of-view image and the planar image as the peripheral field-of-view image, the image transmission rate can be reduced as compared to a case where the stereoscopic image is displayed across the image display region 201.

### Fourth Embodiment.

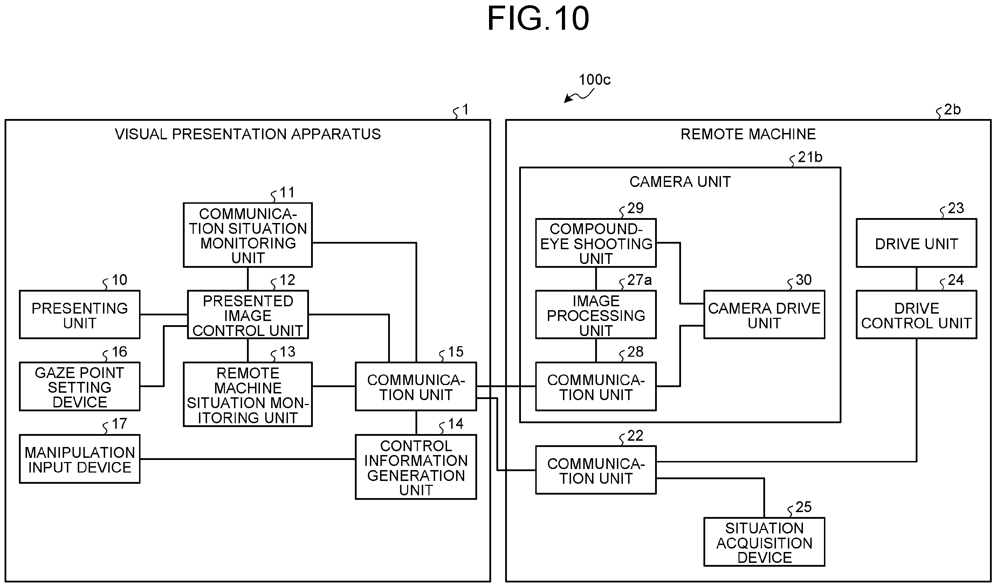

FIG. 10 is a diagram illustrating an exemplary configuration of a remote machine manipulation system according to a fourth embodiment. A remote machine manipulation system 100c of the present embodiment includes the visual presentation apparatus 1 similar to that of the first embodiment and a remote machine 2b. A component having a similar function to the corresponding component in the first or third embodiment will be denoted by the reference numeral identical to that of the component in the first or third embodiment, and a redundant description will be omitted. Hereinafter, differences from the first and third embodiments will mainly be described.

The remote machine 2b is similar to the remote machine 2a of the third embodiment except for including a camera unit 21b instead of the camera unit 21a. The camera unit 21b is similar to the camera unit 21a of the third embodiment except that a camera drive unit 30 is added.

The camera drive unit 30 controls at least one of the direction of the compound-eye shooting unit 29, that is, the direction of the camera, the distance (the distance between the two cameras of the compound-eye camera) of the compound-eye shooting unit 29, and the angle of convergence of the compound-eye shooting unit 29. In a case where the camera drive unit 30 can change the direction of the compound-eye shooting unit 29, the camera drive unit 30 receives, from the communication unit 22, information indicating the direction of the compound-eye shooting unit 29 designated by an operator's input to the visual presentation apparatus 1, for example, and changes the direction of the compound-eye shooting unit 29 on the basis of the received information. As a result, the direction of the compound-eye shooting unit 29 can be set in accordance with the request of the operator. In a case where the camera drive unit 30 can change the distance of the compound-eye shooting unit 29, the camera drive unit 30 receives, from the communication unit 22, information indicating the distance of the compound-eye shooting unit 29 input to the visual presentation apparatus 1 by operator's manipulation, for example, and changes the distance of the compound-eye shooting unit 29 on the basis of the received information. As a result, the depth of the stereoscopic image can be set in accordance with the request of the operator. Also, the presented image control unit 12 may set the distance of the compound-eye shooting unit 29 in accordance with the operating mode. For example, the image parameters may include the distance of the compound-eye shooting unit 29. As a result, an appropriate depth resolution can be set in accordance with the operating mode. Moreover, in a case where the camera drive unit 30 can change the angle of convergence of the compound-eye shooting unit 29, the camera drive unit 30 receives, from the communication unit 22, information indicating the angle of convergence of the compound-eye shooting unit 29 input to the visual presentation apparatus 1 by operator's manipulation, for example, and changes the angle of convergence of the compound-eye shooting unit 29 on the basis of the received information. When the angle of convergence is adjusted, the stereoscopic vision may be facilitated, but when the angle of convergence is not adjusted, the resolution of depth perception may be higher. Therefore, by allowing the angle of convergence to be set by the operator's manipulation, it is possible to provide an image corresponding to the request of the operator. The operation of the present embodiment other than that described above is similar to that of the first embodiment.

Note that, although FIG. 10 illustrates the example in which the gaze point setting device 16 is used, the line-of-sight measurement device 18 described in the second embodiment may be used instead of the gaze point setting device 16. Moreover, in a case where a monocular camera is used as in the first embodiment, the camera drive unit 30 may be added so that the direction of the shooting unit 26 can be changed.

### Fifth Embodiment.

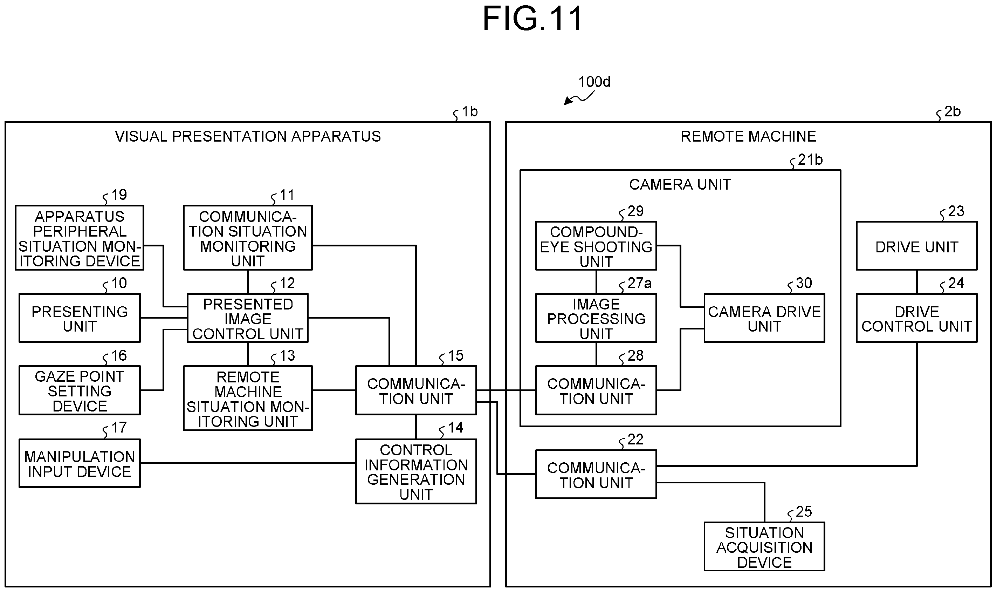

FIG. 11 is a diagram illustrating an exemplary configuration of a remote machine manipulation system according to a fifth embodiment. A remote machine manipulation system 100d of the present embodiment includes a visual presentation apparatus 1b and the remote machine 2b similar to that of the fourth embodiment. A component having a similar function to the corresponding component in the first or fourth embodiment will be denoted by the reference numeral identical to that of the component in the first or fourth embodiment, and a redundant description will be omitted. Hereinafter, differences from the first and fourth embodiments will mainly be described.

The visual presentation apparatus 1b is similar to the visual presentation apparatus 1 of the first embodiment except that an apparatus peripheral situation monitoring device 19 is added. The apparatus peripheral situation monitoring device 19 detects whether or not an object exists in the field of view of the operator corresponding to the central field-of-view image. For example, the apparatus peripheral situation monitoring device 19 detects the presence or absence of an object existing between the operator and the presenting unit 10 on which the image is displayed and existing in a region corresponding to the central field-of-view region 202. The apparatus peripheral situation monitoring device 19 for example may be a camera and an image processing device or may be a distance sensor or the like, the camera shooting an image of the region between the operator and the presenting unit 10. In a case where the apparatus peripheral situation monitoring device 19 is the camera and the image processing device, the image processing device determines the presence or absence of an object existing at the position corresponding to the central field-of-view region 202 between the operator and the presenting unit 10 from the image shot by the camera, and outputs a result of determination as a detection result to the presented image control unit 12.

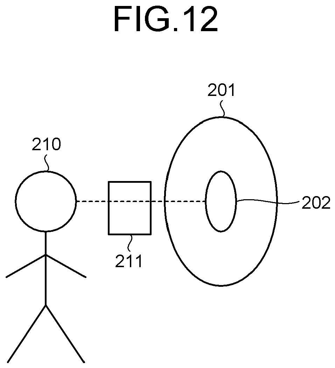

FIG. 12 is a diagram illustrating an example of an object detected by the apparatus peripheral situation monitoring device 19 of the present embodiment. In the example illustrated in FIG. 12, an object 211 exists in a region corresponding to the central field-of-view region 202 between an operator 210 and the presenting unit 10. With a stereoscopic image displayed as the central field-of-view image, in a case where the presented image control unit 12 determines that the object 211 exists in the region corresponding to the central field-of-view region 202 between the operator 210 and the presenting unit 10 on the basis of the detection result by the apparatus peripheral situation monitoring device 19, the presented image control unit 12 reduces the resolution of the peripheral field-of-view image. This is based on an experimental result that, when the object 211 is determined to exist in the region corresponding to the central field-of-view region 202 between the operator 210 and the presenting unit 10 on the basis of the detection result by the apparatus peripheral situation monitoring device 19, the operator 210 cannot have stereoscopic vision but can maintain stereoscopic vision when the resolution of the peripheral field-of-view image is low. Thus, with the stereoscopic image displayed as the central field-of-view image, in the case where the presented image control unit 12 determines that the object 211 exists in the region corresponding to the central field-of-view region 202 between the operator 210 and the presenting unit 10 on the basis of the detection result by the apparatus peripheral situation monitoring device 19, the presented image control unit 12 reduces the resolution of the peripheral field-of-view image so that the operator can maintain stereoscopic vision of the central field-of-view image. That is, in the case where the central field-of-view image is the stereoscopic image, the presented image control unit reduces the resolution of the peripheral field-of-view image when the apparatus peripheral situation monitoring device 19 detects that an object exists. Note that the region corresponding to the central field-of-view region 202 includes the vicinity of the central field-of-view region 202 corresponding to the peripheral field of view close to the central field of view and outside the range of stereoscopic vision.

Note that, although FIG. 11 illustrates the example in which the gaze point setting device 16 is used, the line-of-sight measurement device 18 described in the second embodiment may be used instead of the gaze point setting device 16. Also, the apparatus peripheral situation monitoring device 19 may be similarly added to the remote machine manipulation system 100b described in the third embodiment, and the presented image control unit 12 may perform the operation described in the present embodiment. Moreover, in a case where a monocular camera is used as in the first embodiment, the apparatus peripheral situation monitoring device 19 may be added, and the presented image control unit 12 may perform the operation described in the present embodiment.

### Sixth Embodiment.

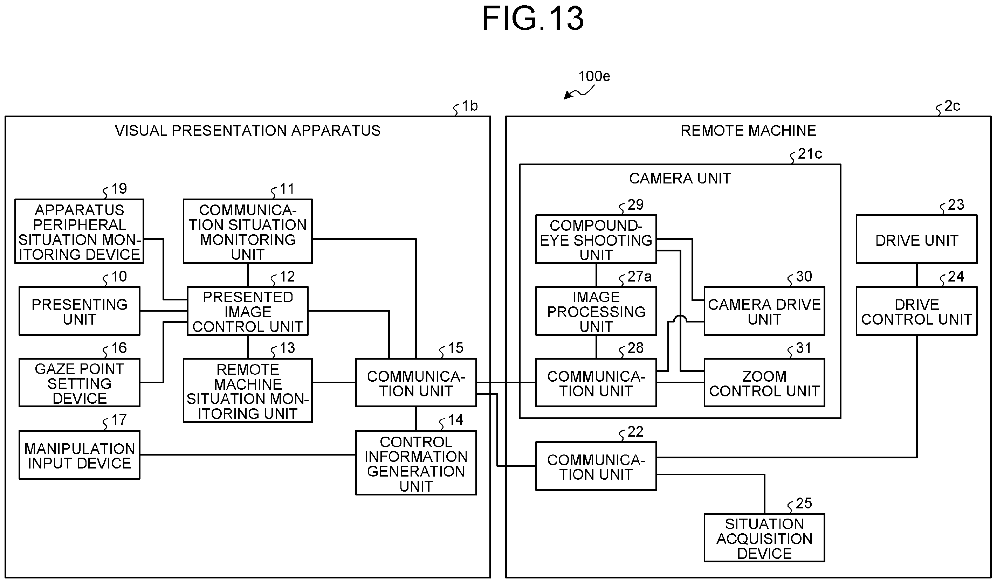

FIG. 13 is a diagram illustrating an exemplary configuration of a remote machine manipulation system according to a sixth embodiment. A remote machine manipulation system 100e of the present embodiment includes the visual presentation apparatus 1b similar to that of the fifth embodiment and a remote machine 2c. A component having a similar function to the corresponding component in the first, fourth, or fifth embodiment will be denoted by the reference numeral identical to that of the component in the first, fourth, or fifth embodiment, and a redundant description will be omitted. Hereinafter, differences from the first, fourth, and fifth embodiments will mainly be described.

The remote machine 2c is similar to the remote machine 2b of the fourth embodiment except for including a camera unit 21c instead of the camera unit 21b. The camera unit 21c is similar to the camera unit 21b of the fourth and fifth embodiments except that a zoom control unit 31 is added.

The zoom control unit 31 controls zoom-in and zoom-out of an image shot by the compound-eye shooting unit 29. The zoom control unit 31 may control zoom-in and zoom-out by optical zoom, or may control zoom-in and zoom-out by digital zoom. In a case where the zoom control unit 31 controls zoom-in and zoom-out by optical zoom, for example, the compound-eye shooting unit 29 may drive an optical system to be able to change the focus, or a variable focus lens may be used for the compound-eye shooting unit 29. In a case of controlling zoom-in and zoom-out by digital zoom, the zoom control unit 31 performs zoom-in by cutting out and stretching a part of the shot image. For example, the presented image control unit 12 may set the zoom (zoom-in and zoom-out) in accordance with the operating mode. For example, the image parameters may include the zoom. As a result, the zoom can be set in accordance with the operating mode, and the operator can have improved depth perception and improved operability. Moreover, the zoom control unit 31 may receive, from the communication unit 22, information indicating zoom-in or zoom-out that is input to the visual presentation apparatus 1b by operator's manipulation, and control the zoom of the compound-eye shooting unit 29 on the basis of the received information. Also, the zoom control unit 31 may control the compound-eye shooting unit 29 in conjunction with zoom-in and zoom-out of the image. For example, the camera drive unit 30 may control at least one of the distance between the cameras and the angle of convergence thereof in the compound-eye shooting unit 29 in accordance with the magnification determined by the zoom control unit 31.

Furthermore, one of methods used for reducing the image transmission rate when the communication situation changes for the worse may include a method of decreasing the range that is shot as a center field-of-view image and then stretching and enlarging the image of the region, or a method of decreasing the entire range that is shot and then stretching and enlarging the image of the region. That is, the zoom may be included as one of the image parameters changed in accordance with the communication situation. The operation of the present embodiment other than that described above is similar to that of the fifth embodiment.

Note that, although FIG. 13 illustrates the example in which the gaze point setting device 16 is used, the line-of-sight measurement device 18 described in the second embodiment may be used instead of the gaze point setting device 16. Also, in a case where a monocular camera is used as in the first embodiment, the zoom control described in the present embodiment may be applied. Moreover, the zoom control described in the present embodiment may be added to the remote machine manipulation systems 100b and 100c described in the third and fourth embodiments.

### Seventh Embodiment.

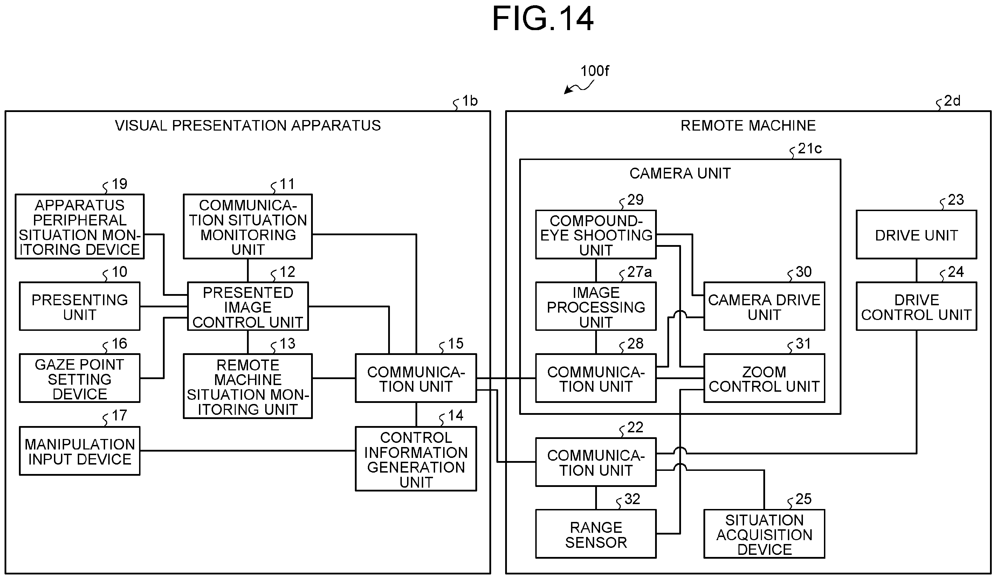

FIG. 14 is a diagram illustrating an exemplary configuration of a remote machine manipulation system according to a seventh embodiment. A remote machine manipulation system 100f of the present embodiment includes the visual presentation apparatus 1b similar to that of the fifth embodiment and a remote machine 2d. A component having a similar function to the corresponding component in the first, fifth, or sixth embodiment will be denoted by the reference numeral identical to that of the component in the first, fifth, or sixth embodiment, and a redundant description will be omitted. Hereinafter, differences from the first, fifth, and sixth embodiments will mainly be described.

The remote machine 2d is similar to the remote machine 2c of the sixth embodiment except that a range sensor 32 is added. The range sensor 32 measures, for example, a distance between the remote machine 2d and an object such as a target that is manipulated (a target of manipulation) by the remote machine 2d. For example, in a case where the remote machine 2d includes an end effector, the range sensor 32 measures a distance between the end effector and the target of manipulation. The range sensor 32 outputs a measurement result to the zoom control unit 31. The zoom control unit 31 determines the magnification on the basis of the measurement result, and controls zoom-in and zoom-out of the image shot by the compound-eye shooting unit 29 on the basis of the determined magnification. For example, on the basis of the measurement result, the zoom control unit 31 zooms in the image when the distance between the remote machine 2d and the target of manipulation decreases, or zooms out the image when the distance between the remote machine 2d and the target of manipulation increases. For example, a magnification indicating a zoom-in rate or zoom-out rate is predetermined for each distance between the remote machine 2d and the target of manipulation, so that the zoom control unit 31 controls zoom-in and zoom-out of the image shot by the compound-eye shooting unit 29.

As a result, for example, when the end effector of the remote machine 2d approaches the target of manipulation, the image is zoomed in without the need for manipulation by the operator, whereby it is possible to improve the operability while reducing the load on the operator. Also, in a case where the remote machine 2d is a drone with the target of manipulation being a landing place such as the ground, the image is zoomed in when the remote machine 2d approaches the landing place, whereby it is possible to improve the operability while reducing the load on the operator. In a case where the remote machine 2d is a vehicle and travels a spot with an obstacle, the image is zoomed in when the remote machine 2d approaches the obstacle, whereby it is possible to improve the operability while reducing the load on the operator. The operation of the present embodiment other than that described above is similar to that of the sixth embodiment. Note that the operator may be able to set on/off (enabling or disabling) of automatic zoom control using the measurement result by the range sensor 32.

Moreover, the measurement result by the range sensor 32 may be transmitted to the visual presentation apparatus 1b by the communication unit 22, and the presented image control unit 12 may receive the measurement result via the communication unit 15 and determine the zoom magnification using the received measurement result. The zoom control unit 31 receives the determined magnification via the communication unit 15 and the communication unit 28, and controls the zoom of the compound-eye shooting unit 29 on the basis of the received magnification.

Note that, although FIG. 14 illustrates the example in which the gaze point setting device 16 is used, the line-of-sight measurement device 18 described in the second embodiment may be used instead of the gaze point setting device 16. Also, in a case where a monocular camera is used as in the first embodiment, the zoom control using the measurement result by the range sensor 32 as described in the present embodiment may be applied. Moreover, the zoom control using the measurement result by the range sensor 32 as described in the present embodiment may be added to the remote machine manipulation systems 100b and 100c described in the third and fourth embodiments.

### Eighth Embodiment.

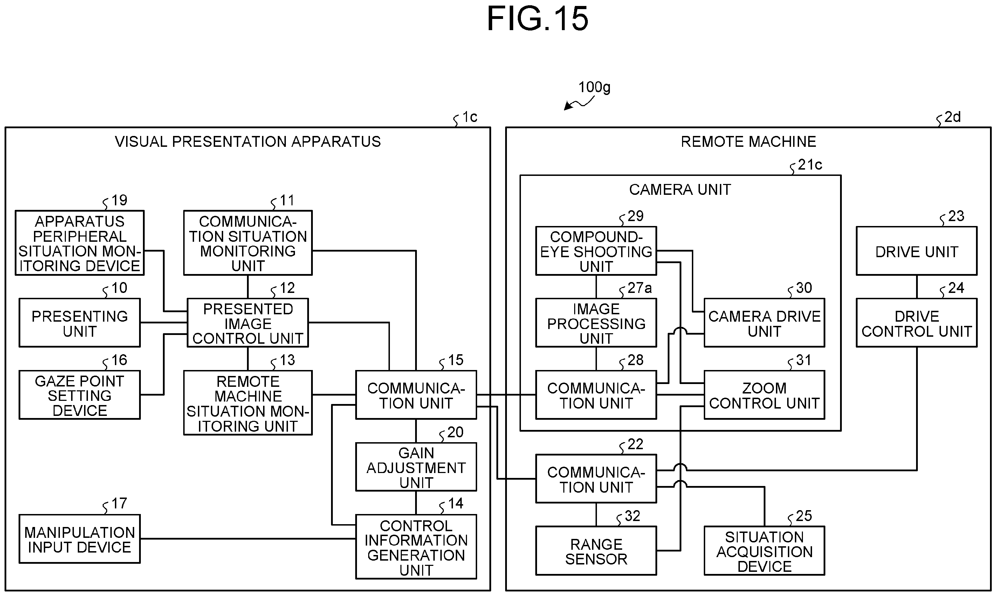

FIG. 15 is a diagram illustrating an exemplary configuration of a remote machine manipulation system according to an eighth embodiment. A remote machine manipulation system 100g of the present embodiment includes a visual presentation apparatus 1c and the remote machine 2d similar to that of the seventh embodiment. A component having a similar function to the corresponding component in the first or seventh embodiment will be denoted by the reference numeral identical to that of the component in the first or seventh embodiment, and a redundant description will be omitted. Hereinafter, differences from the first and seventh embodiments will mainly be described.

The visual presentation apparatus 1c is similar to the visual presentation apparatus 1b of the seventh embodiment except that a gain adjustment unit 20 is added. In the present embodiment, the measurement result by the range sensor 32 is transmitted to the visual presentation apparatus 1c by the communication unit 22, and the presented image control unit 12 receives the measurement result via the communication unit 15. The gain adjustment unit 20 determines the zoom magnification as in the seventh embodiment on the basis of the measurement result, determines the gain of manipulation for an action of the remote machine 2d (the gain of manipulation for causing the remote machine 2d to perform an action) on the basis of the magnification, changes the control information generated by the control information generation unit 14 on the basis of the determined gain, and transmits the changed control information to the remote machine 2d via the communication unit 15. Furthermore, the gain adjustment unit 20 transmits the determined zoom magnification to the camera unit 21c of the remote machine 2d via the communication unit 15.

Note that, here, the gain adjustment unit 20 determines the zoom magnification, but the zoom control unit 31 may determine the zoom magnification on the basis of the measurement result by the range sensor 32 and transmit the determined zoom magnification to the visual presentation apparatus 1c via the communication unit 28. In this case, the gain adjustment unit 20 of the visual presentation apparatus 1c determines the gain of operation of the remote machine 2d on the basis of the zoom magnification received via the communication unit 15, changes the control information generated by the control information generation unit 14 on the basis of the determined gain, and transmits the changed control information to the remote machine 2d via the communication unit 15. Alternatively, the gain adjustment unit 20 may be provided in the remote machine 2d so that the remote machine 2d may determine the gain on the basis of the zoom magnification received from the zoom control unit 31, change the control information, and output the changed control information to the drive control unit 24.

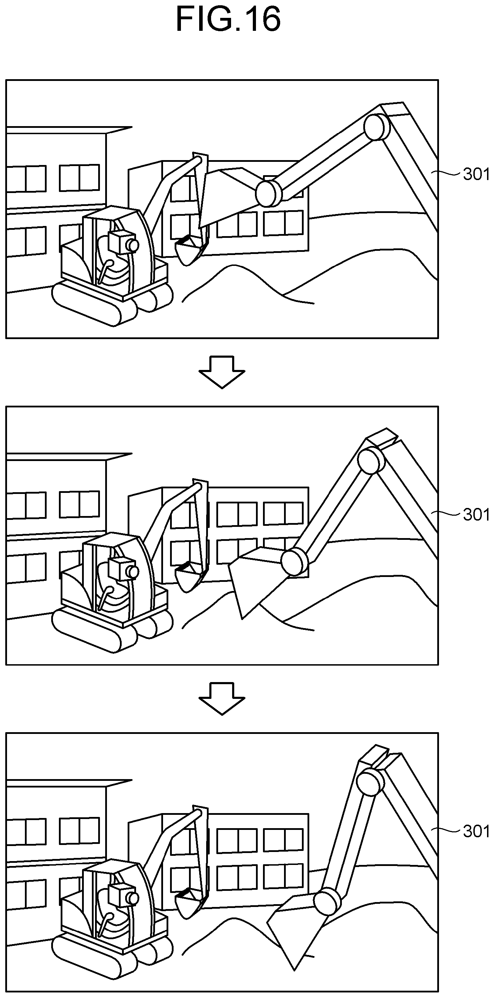

FIG. 16 is a set of diagrams illustrating examples of an image displayed by the visual presentation apparatus 1c of the present embodiment in a case where the image is not zoomed in or out. In the example illustrated in FIG. 16, the remote machine 2d is a construction machine, and a shovel (bucket) gradually approaches soil that is the target of manipulation. In the images, the size of a display figure 301 representing the remote machine 2d does not change.

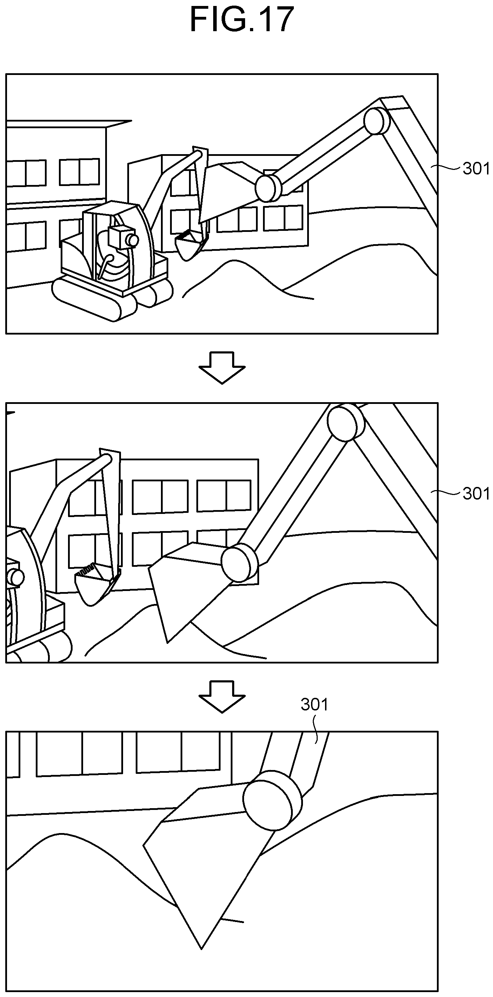

FIG. 17 is a set of diagrams illustrating examples of an image displayed by the visual presentation apparatus 1c of the present embodiment in a case where the image is zoomed in and out. In the example illustrated in FIG. 17, the situation is similar to that in the example illustrated in FIG. 16, but the image is zoomed in as the shovel approaches the soil that is the target of manipulation, and the size of the display figure 301 also changes. As can be seen by comparing FIG. 16 and FIG. 17, in the example illustrated in FIG. 17, the situation around the shovel is easily seen by the display, whereas when the operator performs manipulation on the basis of the image, the amplitude of the operation is determined on the basis of the distance in the displayed image, in which case, when the image is zoomed in as illustrated in FIG. 17, the ratio between the distance in the displayed image and the distance in the actual region that is shot changes, so that there is a possibility of inconsistency between the operation intended by the operator and the control value manipulated by the operator. For example, in a case where the operator performs manipulation on the basis of an enlarged screen, an amount of manipulation performed by the operator is larger than that in a case where the operator performs manipulation on the basis of a screen that is not enlarged. Therefore, the gain adjustment unit 20 reduces the control value of the operation of the remote machine 2d corresponding to the amount of manipulation by the operator on the basis of the zoom magnification, so that the operation intended by the operator can be easily implemented, and the operability is improved.

Note that, although FIG. 15 illustrates the example in which the gaze point setting device 16 is used, the line-of-sight measurement device 18 described in the second embodiment may be used instead of the gaze point setting device 16. Also, in a case where a monocular camera is used as in the first embodiment, the operation described in the present embodiment may be applied. Moreover, the operation described in the present embodiment may be applied to the remote machine manipulation systems 100b and 100c described in the third and fourth embodiments.

### Ninth Embodiment.

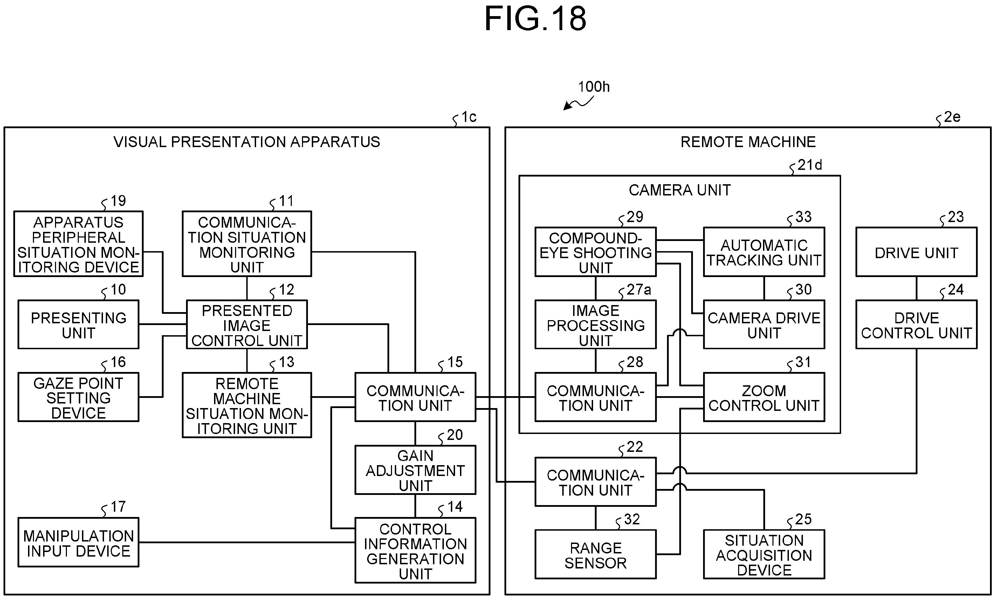

FIG. 18 is a diagram illustrating an exemplary configuration of a remote machine manipulation system according to a ninth embodiment. A remote machine manipulation system 100h of the present embodiment includes the visual presentation apparatus 1c similar to that of the eighth embodiment and a remote machine 2e. A component having a similar function to the corresponding component in the first or eighth embodiment will be denoted by the reference numeral identical to that of the component in the first or eighth embodiment, and a redundant description will be omitted. Hereinafter, differences from the first and eighth embodiments will mainly be described.

The remote machine 2e is similar to the remote machine 2d of the eighth embodiment except for including a camera unit 21d instead of the camera unit 21c. The camera unit 21d is similar to the camera unit 21c of the eighth embodiment except that an automatic tracking unit 33 is added.

The automatic tracking unit 33 controls the shooting direction of the compound-eye shooting unit 29 such that a specified target is included in the central field-of-view image. For example, the automatic tracking unit 33 controls the shooting direction of the compound-eye shooting unit 29 such that a specified object is at the center of the field of view of the compound-eye shooting unit 29. The specified object is, for example, an end effector of the remote machine 2e. The automatic tracking unit 33 detects the specified object from the image shot by the compound-eye shooting unit 29, and controls the shooting direction of the compound-eye shooting unit 29 such that a specified point such as the center of the specified object is at the center of the field of view of the compound-eye shooting unit 29. As a result, the end effector of the remote machine 2e is automatically tracked, so that the manipulation load on the operator can be reduced. Note that the specified object is not limited to the end effector, and may be any object that the operator desires to gaze at. Also, the operator may be able to set on/off of the automatic tracking, that is, whether to enable or disable the automatic tracking. The operator may also be able to set the specified object. For example, the specified object may be designated by the operator designating a region corresponding to the specified object while the image is displayed.

Note that, although FIG. 18 illustrates the example in which the gaze point setting device 16 is used, the line-of-sight measurement device 18 described in the second embodiment may be used instead of the gaze point setting device 16. Also, in a case where a monocular camera is used as in the first embodiment, the operation described in the present embodiment may be applied. Moreover, the operation described in the present embodiment may be applied to the remote machine manipulation systems 100b and 100c described in the third and fourth embodiments.

The configurations illustrated in the above embodiments each illustrate an example so that another known technique can be combined, the embodiments can be combined together, or the configurations can be partially omitted and/or modified without departing from the scope of the present disclosure.

### Reference Signs List

1, 1a, 1b, 1c visual presentation apparatus; 2, 2a, 2b, 2c, 2d, 2e remote machine; 10 presenting unit; 11 communication situation monitoring unit; 12 presented image control unit; 13 remote machine situation monitoring unit; 14 control information generation unit; 15, 22, 28 communication unit; 16 gaze point setting device; 17 manipulation input device; 18 line-of-sight measurement device; 19 apparatus peripheral situation monitoring device; 20 gain adjustment unit; 21, 21a, 21b, 21c, 21d camera unit; 23 drive unit; 24 drive control unit; 25 situation acquisition device; 26 shooting unit; 27, 27a image processing unit; 29 compound-eye shooting unit; 30 camera drive unit; 31 zoom control unit; 32 range sensor; 33 automatic tracking unit; 100, 100a, 100b, 100c, 100d, 100e, 100f, 100g, 100h remote machine manipulation system; 201 image display region; 202 central field-of-view region; 203 peripheral field-of-view region.

## Claims

1. A remote machine manipulation system comprising:
a camera to shoot an image of a remote machine that is remotely manipulated; and
a visual presentation apparatus to receive the image shot by the camera, and present an operator who manipulates the remote machine with the image by displaying the received image, wherein
the visual presentation apparatus includes:
a communication situation monitoring unit to detect a communication situation in the reception of the image; and
a presented image control unit to determine a central field-of-view region and a peripheral field-of-view region in a display region in which the image is displayed and determine, on the basis of the communication situation detected by the communication situation monitoring unit, an image parameter related to a transmission rate of a central field-of-view image displayed in the central field-of-view region and a peripheral field-of-view image displayed in the peripheral field-of-view region.

2. The remote machine manipulation system according to claim 1, comprising
a gaze point setting device to set a gaze point of the operator, wherein
the presented image control unit determines the central field-of-view region on the basis of the gaze point set by the gaze point setting device.

3. The remote machine manipulation system according to claim 2, wherein the gaze point setting device is a line-of-sight measurement device that measures a line of sight of the operator.

4. The remote machine manipulation system according to any one of claims 1 to 3, comprising
a remote machine situation monitoring unit to detect an operating situation of the remote machine, wherein
a detection result provided by the remote machine situation monitoring unit is used to determine the image parameter.

5. The remote machine manipulation system according to claim 4, wherein the remote machine situation monitoring unit detects a speed of movement of the remote machine.

6. The remote machine manipulation system according to claim 4 or 5, wherein the remote machine situation monitoring unit detects a distance between the remote machine and a target of manipulation by the remote machine.

7. The remote machine manipulation system according to any one of claims 1 to 6, wherein the image parameter includes at least one of a resolution of the peripheral field-of-view image, a frame rate of the peripheral field-of-view image, a color of the peripheral field-of-view region, or a size of the central field-of-view region.

8. The remote machine manipulation system according to any one of claims 1 to 7, comprising
an automatic tracking unit to control a shooting direction of the camera such that a specified target is included in the central field-of-view image.

9. The remote machine manipulation system according to any one of claims 1 to 8, comprising
a zoom control unit to control zoom-in and zoom-out of the image shot by the camera.

10. The remote machine manipulation system according to claim 9, comprising
a range sensor to measure a distance between the remote machine and a target of manipulation by the remote machine, wherein
the zoom control unit controls zoom-in and zoom-out of the image on the basis of a magnification that is determined on the basis of a measurement result provided by the range sensor.

11. The remote machine manipulation system according to claim 9 or 10, comprising
a gain adjustment unit to adjust a gain of manipulation for an action of the remote machine in accordance with a magnification set by the zoom control unit.

12. The remote machine manipulation system according to any one of claims 1 to 8, wherein
the camera is a compound-eye camera, and
the image parameter includes information indicating whether or not each of the central field-of-view image and the peripheral field-of-view image is a stereoscopic image.

13. The remote machine manipulation system according to any one of claims 9 to 11, wherein
the camera is a compound-eye camera, and
the image parameter includes information indicating whether or not each of the central field-of-view image and the peripheral field-of-view image is a stereoscopic image.

14. The remote machine manipulation system according to claim 13, comprising
a camera drive unit to control at least one of a direction of shooting by the compound-eye camera, a distance between cameras of the compound-eye camera, or an angle of convergence of the compound-eye camera.

15. The remote machine manipulation system according to claim 13 or 14, wherein the zoom control unit controls the camera in conjunction with zoom-in and zoom-out of the image.

16. The remote machine manipulation system according to any one of claims 12 to 15, comprising
an apparatus peripheral situation monitoring device to detect whether or not an object exists in a field of view of the operator corresponding to the central field-of-view image, wherein
in a case where the central field-of-view image is a stereoscopic image, the presented image control unit reduces a resolution of the peripheral field-of-view image when the presence of the object is detected by the apparatus peripheral situation monitoring device.

17. A visual presentation apparatus to receive an image from a camera shooting an image of a remote machine remotely manipulated, and present an operator who manipulates the remote machine with the image by displaying the received image, the visual presentation apparatus comprising:
a communication situation monitoring unit to detect a communication situation in the reception of the image; and
a presented image control unit to determine a central field-of-view region and a peripheral field-of-view region in a display region in which the image is displayed and determine, on the basis of the communication situation detected by the communication situation monitoring unit, an image parameter related to a transmission rate of a central field-of-view image displayed in the central field-of-view region and a peripheral field-of-view image displayed in the peripheral field-of-view region.

18. A visual presentation method by a visual presentation apparatus to receive an image from a camera shooting an image of a remote machine remotely manipulated, and present an operator who manipulates the remote machine with the image by displaying the image received, the visual presentation method comprising:
a step of detecting a communication situation in the reception of the image; and
a step of determining a central field-of-view region and a peripheral field-of-view region in a display region in which the image is displayed and determining, on the basis of the detected communication situation, an image parameter related to a transmission rate of a central field-of-view image displayed in the central field-of-view region and a peripheral field-of-view image displayed in the peripheral field-of-view region.

19. A program to be executed by a visual presentation apparatus to receive an image from a camera shooting an image of a remote machine remotely manipulated, and present an operator who manipulates the remote machine with the image by displaying the image received, the program comprising:
a step of detecting a communication situation in the reception of the image; and
a step of determining a central field-of-view region and a peripheral field-of-view region in a display region in which the image is displayed and determining, on the basis of the detected communication situation, an image parameter related to a transmission rate of a central field-of-view image displayed in the central field-of-view region and a peripheral field-of-view image displayed in the peripheral field-of-view region.
